# EUROPEAN PATENT SPECIFICATION

(11) **EP 1 104 964 B1**
(45) Date of publication and mention of the grant of the patent: **23.03.2005**
(21) Application number: 99124149.8
(22) Date of filing: 02.12.1999
(51) Int. Cl.: H04L 12/58, H04M 3/533, G06F 17/60

(54) **Instant messaging**
Sofortige Nachrichtenübermittlung
Messagerie instantanée

(43) Date of publication of application: 06.06.2001
(73) Proprietor: Sony International (Europe) GmbH, 10785 Berlin (DE)
(72) Inventor: Mache, Niels, Sony Int.(Europe) GmbH, 70736 Fellbach (DE); Kovacs, Ernö, Sony Int.(Europe) GmbH, 70736 Fellbach (DE)
(74) Representative: Rupp, Christian, Dipl.Phys.

(56) References cited:
- EP-A- 0 661 878
- US-A- 5 712 901
- US-A- 5 740 230
- US-A- 5 742 905

## Description

The present invention relates to a system for transmitting messages over a multimedia network from a transmitting client to a target client, to a message broker unit for a distributed multimedia system, to a method for sending messages over a multimedia network from a sending client to a target client as well as to a software program product for implementing such a method in a computer network.

The present invention generally relates to the field of electronic messaging. Electronic messages in the form of e-mails or GSM short message texts are known. They rely on a store-and-forward technique where the originator of the message sends the message to a computer node. In the node the message is stored and then forwarded to other nodes until it reaches a mailbox belonging to the intended user.

Also known from prior art are dedicated gateways for transferring a message from one transfer medium (e.g. SMS) to another transfer medium (e. g. fax). Several GSM network operators and independent service providers offer functionality like this. The major disadvantage of such systems is that there are targeted at a fixed transfer task, so is from one well-defined medium into another.

Another means known from prior art is the use of inexpensive intermediate networks for transmitting messages between different locations. For example, one could send a document as an attachment of a e-mail. This combined message is sent to dedicated gateway where it is converted to fax and transmitted to the intended recipient.

From US-A-5,608,786 an unified messaging system is known. This known technique makes use of existing communication channels or networks. Part of the system relies on a data communication network forming an intermediate leg of the distribution network. Telephone communication is typically used for initial or final legs. Voice mail, E-mail, facsimiles and other message types can be received by the system for retrieval by the subscriber. Communications may be centralised and retrieval of messages can be accomplished using one of a number of separate and distinct approaches. Thus, data communication networks such as the internet can become global voice mail and facsimile mail systems.

An other example of unified messaging system is disclosed in US 5740230.

In view of the above-captioned prior art it is the object of the present invention to provide for a technique capable of unified (multimedia) instant messaging. With other words, the invention should provide a technique for the nearly real-time transfer of multimedia messages and a processing of these messages through a flexible distributed system.

The above object is achieved by means of the features of the independent claims. The dependent claims develop further the central idea of the present invention.

According to the present invention therefore a system for transmitting messages over a multimedia network from a sending client to a target client is provided. The messages comprise respectively target client information. The system comprises a plurality of distributed message gateways, each message gateway being configured for the receipt and/or transmission over at least one dedicated transfer medium. A message broker is connected to the message gateways, wherein the message broker is provided with a client database.

A first message gateway receives a message from a sending client over a first transfer medium and transmits the message or an information extracted thereof to the message broker. The message broker automatically selects an appropriate second transfer medium depending on the content of the client database and the message or the information supplied by the first message gateway. The message is then sent to the target client by means of a second message gateway configured for a transmission over the second transfer medium selected by the message broker. The message contains a secure read count and maximum read count value limiting the maximum reads of the message.

The system can comprise a common internal message format for the communication respectively between the message broker and the message gateways.

The message gateways can be distributed over the network.

The transfer media can comprise analog and digital transfer media.

At least one message processor can be provided between the first and the second message gateway for further processing the content of the message to be transmitted.

The client database can comprise addresses of clients, client preferences and/or characteristics of the transfer network to the corresponding target client.

The message broker can be designed to furthermore perform processing control and/or security processing.

The message broker can be designed to furthermore perform accounting and/or billing.

A plurality of message brokers can be provided.

At least one message broker can be connected to the client database with reduced capacity.

According to another aspect of the present invention a message broker unit for a distributed multimedia system is provided. The message broker is designed to autonomously select an appropriate transfer medium out of a plurality of transfer media for messages received from a sending client and to be transferred to a target client. The message broker is connected to a client database and the transfer medium selection is performed depending on target client information and the content of the client database.

The transfer medium selection can be performed depending on the target network, the message type and/or client preferences contained in the client database.

According to the present invention furthermore a message for sending messages over a multimedia network from a sending client to a target client is provided. The messages comprise target client information. The messages or an information extracted thereof are transmitted from the sending client to a message broker over a first transfer medium. The messages are transmitted to a target client over a second transfer medium, wherein the second transfer medium can be identical to the first transfer medium. The message broker autonomously selects an appropriate second transfer medium out of a plurality of transfer media depending on the content of a client database connected to the message broker and depending on the message or the information extracted thereof (e.g. target client information).

The transmission of the message from the sending client to the target client can be performed essentially in real time.

A conversion from the first transfer medium to the second transfer medium can be performed depending on the target network, the message type and/or client preferences contained in the client database.

Before the transmission to the target client, the content of the message can be further processed by digital signing, encrypting, watermarking and/or language translation.

A life time can be attributed to each message and the message therefore is only transmitted to the target client until the expiration of the life time.

According to another aspect of the present invention a software program product is provided implementing, when loaded into a memory of a computer, a method as set forth above.

In the following further features, objects and advantages of the present invention will become evident for the man skilled in the art by means of a detailed description of embodiments of the invention taken in conjunction with the figures of the enclosed drawings.
Figure 1 shows an example of an unified instant messaging system according to the present invention,
Figure 2 shows the principle communication structure of the unified instant messaging system,
Figure 3 shows the internal structure of an instant message broker,
Figure 4 shows the internal structure of an instant message gateway,
Figure 5 shows the data path for an example of an unified instant message, and
Figure 6 shows an example for an authentication example, i.e. a client cellular phone registration.

The present invention relates to a system that enables the nearly real-time transmission of messages originated from and received by heterogeneous communication networks. The purpose of instant messaging is to transmit high priority messages in (nearly) real-time between clients (man and machine). Such an unified messaging merges analog and digital transmitted messages such as facsimile, voice mail, e-mail, WWW and the cell phone short message service (GSM/SMS) to unified instant messages. A Unified Instant Messaging System (UIMS) consists of four major components:
- distributed gateways,
- message brokers,
- message processors, and
- a client directory database.

Messages of arbitrary form can be translated into Unified Instant Messages (UIM) by Instant Message Gateways (IMGateways). Instant Message Brokers (IMBrokers) control the message flow and further message processing. IMBrokers also ensure message authenticity and security. Further processing steps on an instant message can be performed anywhere in the IP network by Instant Message Processors (IMP) provided by Instant Message Service Providers (IMSP).

The UIMS has the following properties:
a) The system is scalable in a way that the message transmission and conversion capacity can be incrementally increased by extension of gateways, brokers and message processors.
b) IMGateways converts messages of arbitrary protocol and format (e.g. fax, voice mail, GSM Short Message Service, GPRS, e-mail, WWW) into unified instant messages that are transmitted over TCP/IP in (nearly) real-time between IMGateways under IMBrokers control.
c) IMBrokers manage sender/receiver address conversion, user groups, private user profiles, private user data (e.g. telephone books, calendars, notebooks) and message routing, security, accounting and storage.
d) Instant Message Processors enable message translation or conversion and value added services. The account information of the Instant Message Service offered by the ISMP is usually under control of IMBrokers provided by the UIMS carrier.

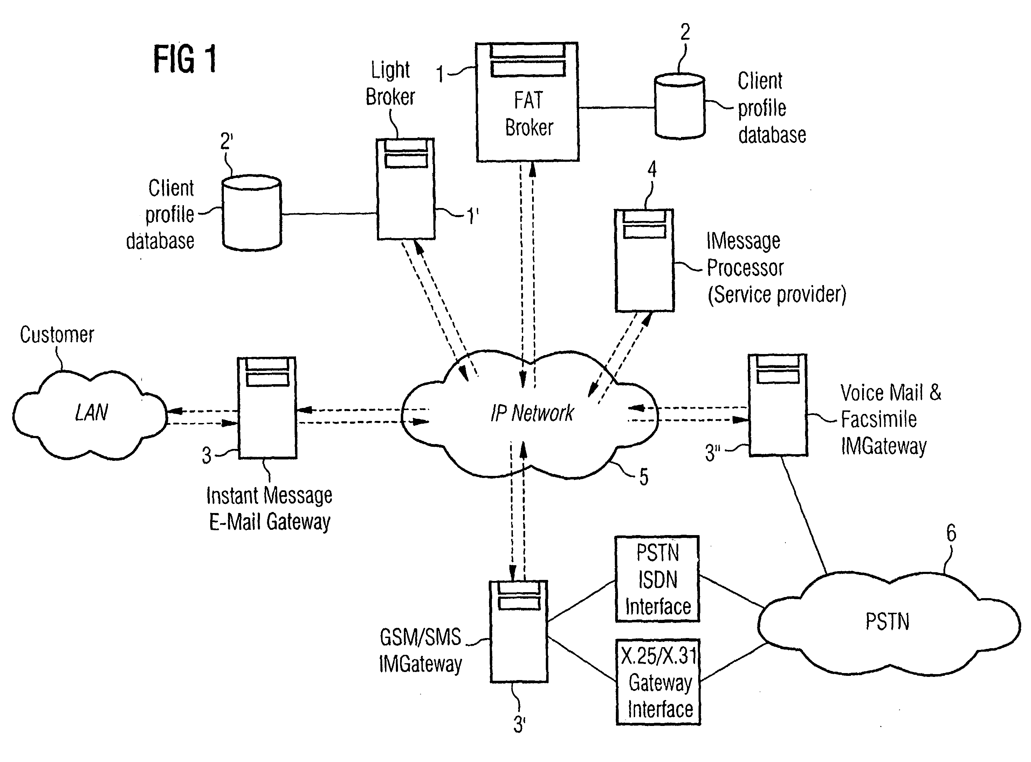

Figure 1 shows an example of an Unified Instant Messaging System (UIMS). The system consists of Instant Message Brokers 1,1', Gateways 3, 3', 3" for e-mail, GSM/SMS, facsimile and voice mail, and an Instant Message Processor 4. The units of the Instant Messaging System communicate with each other over an IP network 5. The instant message broker 1 manages the system configuration and state, user profiles, message routing and services, accounting and security. "Light" and "fat" message 1, 1' brokers differ in such a way that light brokers contain a limited number of user profiles (reduced capacity) in comparison with fat message brokers. Respectively a client profile database 2, 2' is connected with each message broker 1, 1'.

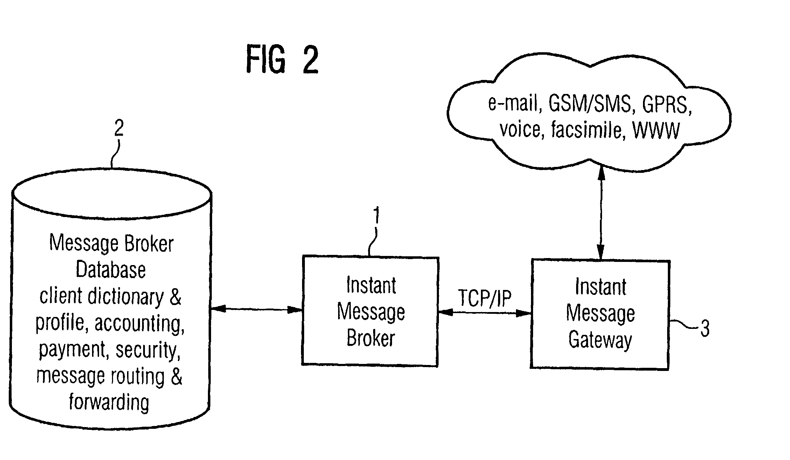

Figure 2 shows the principle communication structure of the unified instant messaging system consisting of three major components: distributed gateways 3, message brokers 1 and a client directory profile database 2. The properties of the messaging system are:
1. The system is fully scalable. The message transmission capacity can be incrementally increased by extension with additional gateways, message brokers and distributed client databases.
2. Gateways converts arbitrary messages (GSM/SMS, e-mail, fax, WWW) into unified instant messages which are seamlessly transmitted in (nearly) real-time between message brokers and gateways over TCP/IP.
3. Message brokers manage client address conversion, user profile handling, message routing, security and accounting.

Instant message gateways and brokers communicate over TCP/IP and may be located anywhere in the Internet. In respect to security and performance, however, the message broker has direct access to the client dictionary.

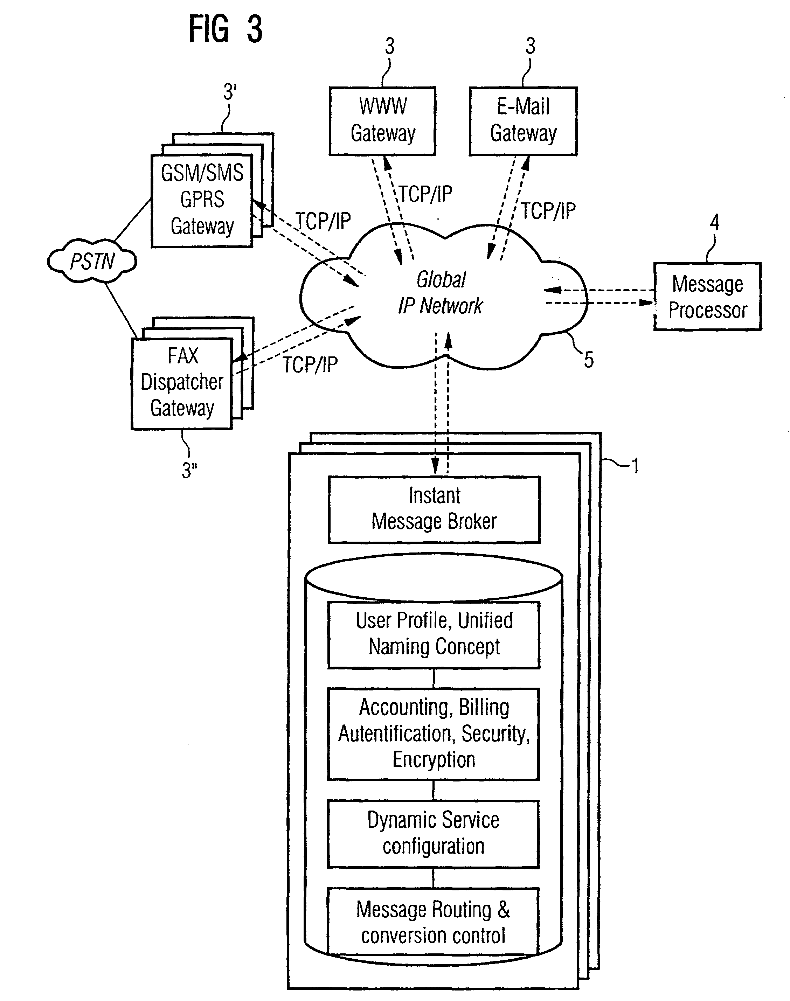

Figure 3 shows the Instant Message Broker (IMB) internals. The internal units of the instant message broker 1 administer user profiles, manages accounting, billing, authentication and security. A configuration unit dynamically traces the state and the properties of gateways, message processors and partner brokers. Dependent on message type, originator and sender location, user profiles and available resources the instant message required conversion is determined and the instant message is routed from the originator gateway to the destination gateway.

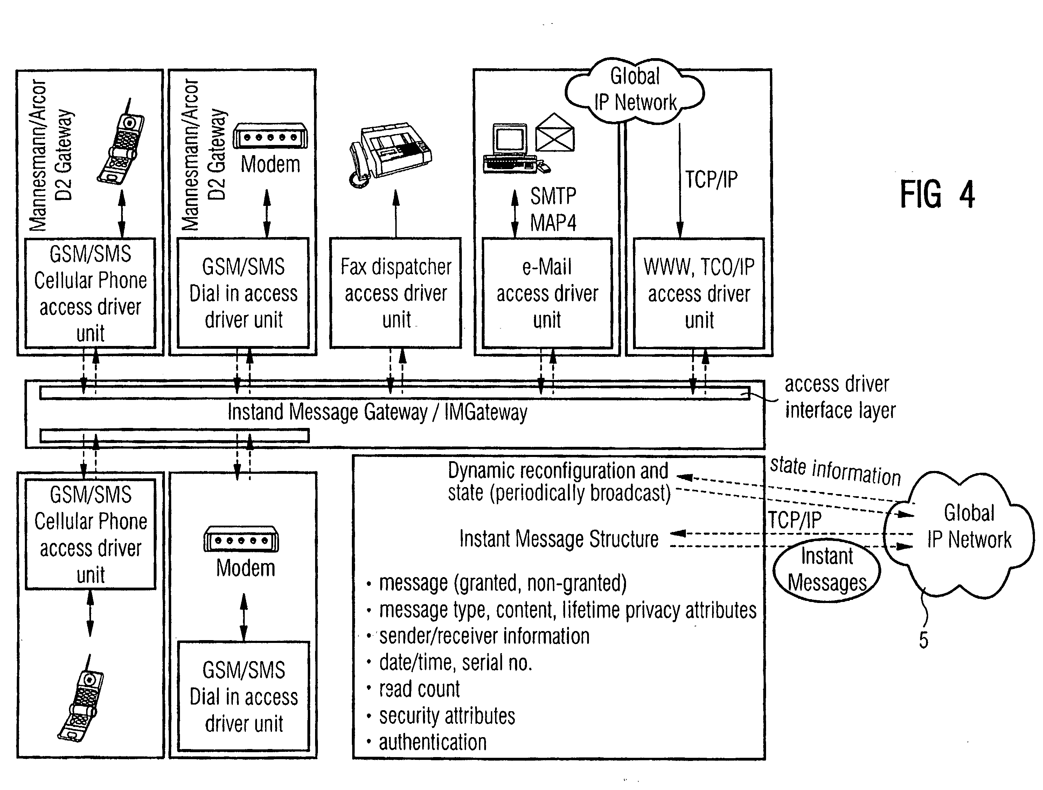

Figure 4 shows the internal structure (example) of an Instant Message Gateway (IMGateway). An IMGateway may have multiple access driver units, such as GSM/SMS, e-mail, facsimile, WWW. The access driver units communicate with the gateway control over an access driver interface layer. A dynamic configuration unit traces the state and configuration of the gateway with its access drivers. The state configuration is periodically transmitted to the message brokers that manage the state and properties of the UIMS. The gateway is usually capable to receive and send instant messages (bi-directional). Furthermore the gateway can extract information from the message.

Incoming messages (from outside of the IP network 5) are converted into the unified messaging format. Then the message and/or an information extracted thereof is sent to the message broker and so on. Incoming instant messages (the gateway works as a receiver gateway) are converted into the target format and sent out (e.g. over PSTN). In this case the IMGateway returns a delivery acknowledgement.

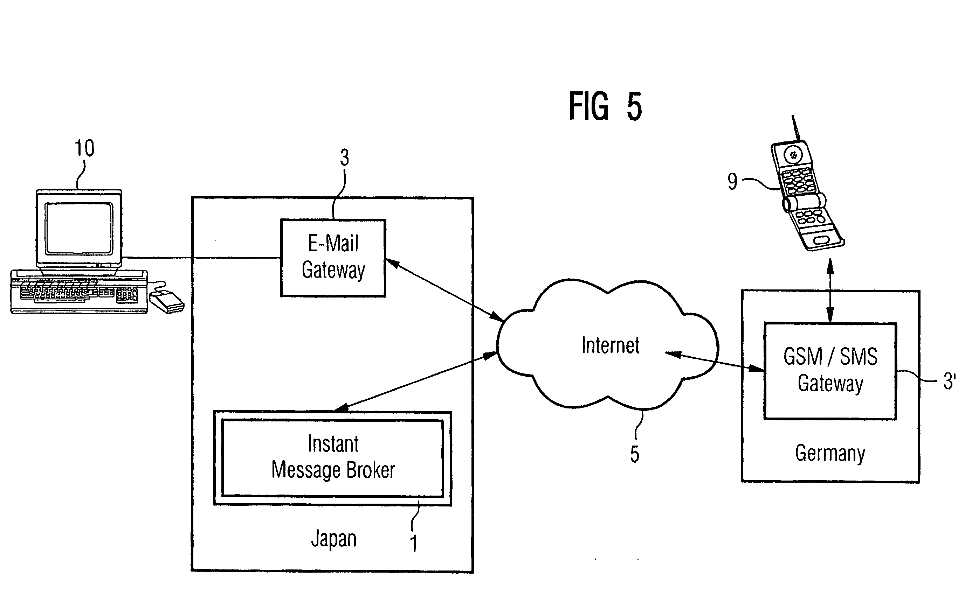

Fig. 5 shows an unified instant message originated in Japan as an e-mail, transmitted over the Internet 5 and received from a cellular phone 9 located in Germany.

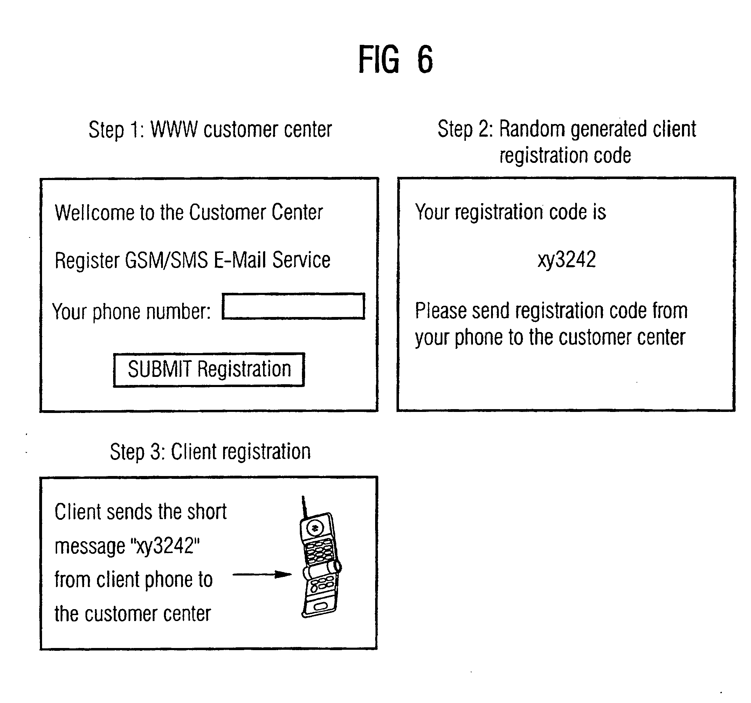

Figure 6 shows an authentication example, i.e. client cellular phone registration. On a higher level, a WWW based example of a user authentication is shown below. In principle authentication of the client can be ensured by using session keys in combination with two-way communication (for example WWW and GSM/SMS).

### System Description

As has been already said the system consists of four basic processing units: the message gateway unit 3 (IMGateway), the message broker units (IMBroker) 1, the message processors 4 (IMProcessor), and the client database 2. The system might contain several instances of each of these units. Units might be located together on one computing node or might be distributed over several computing nodes connected by the network 5. Messages are processed by this network 5 of units either by following a pre-defined processing path or by dynamically determining the path to take through the different units. In the later case, the current network configuration i.e. the available gateways, gateway interfaces and message processors is determined by status information that is periodically broadcast, between gateways, processors and message brokers. The instant message transfer and processing manages IMBrokers according to user preferences (kept in client databases 2) and current network configuration.

### Definition of unified instant messaging (UIM):

A unified instant message is characterized through
- Message delivery in nearly real-time
- a unique message structure and presentation, flexible to present any type of messages
- a limited message validity or lifetime (inside the message system)
- message generation and processing by man and machine.

The unified instant message structure might contain the following components (not limited to):
- **Text, a text representation of the message that is Optionally Split into granted and non-granted content.**
   - Granted information.
   - Non-granted information, available by client induced message "magnification".
- **Binary content, optionally optional split into granted and non-granted content. Arbitrary information is stored in a binary content format. This could be a standardized multimedia format (like an audio file, a video file) or a compound document.**
   - Granted information.
   - Non-granted information, available by client induced message "magnification".
- **Meta information that provides information about the message content. Instant message meta information might contain the following fields (not limited to):**
   - **Originator (originator client)**
      A (unified) address that describes the message originator: name, title, postal address, phone/fax number(s), e-mail address(es), et cetera. Message originator hiding for anonymous message creation is an additional property of the originator address. The IMBroker may manage address resolution using a unified naming concept (supports name hiding).
   - **originator location**
      An optional geographical location (possible close to real-time) of the message originator such as GPS location information (with several meter resolution). Future applications may rely on real-time positional client information, e.g. messaging for local interest groups, i.e. participants of fares or conventions and anonymous instant messaging between people joining a (public) event.
   - **Receiver (target client)**
      Similar to the information originator but partial address information of the receiver may be also sufficient if unique. The information receiver address may contain additional fields to address multiple receiver interest groups.
   - **Receiver location**
      Optionally location information that describes the intended geographical area of the addressed receiver(s) to which the submitted information is intended to sent. See also originator location.
   - **Time of information origination**
      Date and time of the origination of the instant message. A high time resolution is advantageous (less then or equal one millisecond). The Accuracy should be better then a few minutes.
   - **Time of initial message processing**
      Date and time when the very first instant message processing began. The initial processing time is used for "spontaneous session keys", session keys with limited validity (in range of several milliseconds) for military-grade message authentication and security (as described in Instant Message and information Authentication Protocol, IMAP). Like information origination time, a high time resolution and accuracy is advantageous.
   - **Message lifetime**
      Maximum lifetime of the message. If a message could not be transmitted or delivered to the receiver, the IMGateway may discard the message and notifies the IMBroker (which notifies the originator by sending a notification to an IMGateway).
   - **Message type/content Identification fields. These fields may be processed by the message broker to control further message processing (such as conversion and additional services).**
      Describes the type and protocol of the originator and target message (e.g. GSM/SMS, TCP, e-mail, facsimile, WWW). Optionally describes the message content, language and related-to of a message. Optionally determines if the message is confidential i.e. personalized to the receiver. A personalized message can be read only by the receiver, i.e. the message can not be sent to other users inside the message system (forward message protection).
   - **Message processor**
      Determines that the message is transferred to one or more message processor(s) before being delivered to the destination gateway.
   - **Secure message read count**
      For read-once properties and for unpacking the non-granted information induced by the client message "magnification"
   - **Read count limitation**
      Limits the maximum reads of a message. This property is required when the number of message forwards is limited.
   - **Serial number**
      The serial number of the message, generated by a secure random number generator. The suggested length is currently 160 bit.
   - **Authentication keys**
      A number of message digests that provides message authentication (here Keyed-Hashing for Message Authentication, HMAC).
   - **Public keys**
      This field contains a number of public keys for message encryption, particularly for the non-granted content of the message.

### Basic units of the unified instant message system

As described above, a UIM system consists of four basic units. In the following details of these units are described.

### 1. IMGateways

IMGateways are responsible for receiving and transmitting message between an external network (e.g. PSTN, GSM, other) and the UIM system. A single gateway might contain *access drivers units* for several different means. For example, it could have a ISDN connection to a GSM SMS center and a modem for transmitting a message as a fax. The following list shows examples for access driver units:
- **cellular phone with SMS capability (SMS Cellular Phone Interface)**
   a access unit using a serial line cable or an infrared connection to a cellular phone with SMS capabilties
- **fixed line connection to a SMS center (SMS Dial In Interface)**
   fixed line connections like PSTN (modem), ISDN, X.31, X.25, frame relay or any other means to access a core network SMS service center
- **fax machine (Fax Interface)**
   a connection to a fax machine to transmit messages as a facsimile
- **e-mail system (E-Mail Interface)**
   an interface to an e-mail system (e.g. POP3 or IMP4) for delivering the message as an e-mail. In this case, the UIM system knows that e-mail systems might have limited real-time capabilities.
- **direct TCP/IP connections (Direct TCP/IP Interface)**
   a direct TCP/IP connection to users that are currently or permanently online

The access driver units have usually several functions. They represent the terminating or originating element of a telecommunication connection. Alternative they could be the client (originator) or the server (receiver) part of an Internet connection. Through receiving the message through one access unit and transmitting it through another access unit, the IMGateway performs protocol conversions between different networks.

Furthermore, the access drivers convert received messages into the UIM message format, and outgoing messages into the content format supported by the target network. In this way, the IMGateway performs content conversion depending on the network characteristics. Some examples for IMGateway supported content formats are: facsimile, voice mail, GSM Short Message Service, GPRS datagrams, Email, WWW, TCP/IP-based message formats.

IMGateway have furthermore connections to other units of the UIM system. Usually, this is the Direct TCP/IP Interface, but depending on the UIM system setup, any other kind of network and related access driver units can be used.

### 2. Message Processors (Internal Gatways)

Another unit is the instant message processor (IMP). Sometimes they are called *internal gateways,* as they perform not transport protocol conversions. MPU perform value-added-service for the message processing like language conversion (e.g. german-french), speech processing, bank payment/accounting, digital signing, watermarking, etc.

Usually IMPs are part of the transfer of an IM from the gateway to the massage broker or vice versa. As described above, there might be a pre-defined path through the different units, or the path is determined dynamically by the different units involved or by the IMBroker.

### 3. Instant Message Broker (IMB)

The IMB has direct access to a client database unit. He manages lookup address translation, user preferences and other criteria to determine the next processing steps for the instant messages. He selects an appropriated IMGateway unit for transmitting an IM to the client. Further conversion can be carried out by message processors or by the IMGateways.
- Client data administration
- Message and service accounting
- Ensures message authentication, using MIAP (as described)
- Manages message security, dependent on country specific jurisdiction
- Message confidentiality and pay-per-read functionality. This functionality can be realized by secure instant message read count in combination with message encryption and accounting.

### 4. Client Database Unit

- Uses user profiles to maintain user properties and preferences
- Maintain private user data, such as calendars, telephone books, notes, etc.
- manages message conversion control by using message conversion tables with defined conversion priorities
- Manages message routing and distribution of resource

### Advantageous Differences

Compare with the known art, the invention allows the following:
- Messages are received and sent out over different communication channels.
- The unified instant message system can be dynamically extended to add additional transfer networks, services and capacity. This can be done at runtime.
- The system autonomously selects the outgoing transfer medium according to a set of known addresses of the user, a list of user preferences, and the known characteristics of the transfer network.
- The system performs media conversion on the messages according to target network, message type and client preferences.
- The system might be able to perform additional processing steps on the message like digital signing, encryption, watermarking, language translation or other.
- The system might scale to different size by increasing the number of message gateways, processors and brokers. The system extension can be done in a running system.
- Message transfer, processing control and security is managed by a relatively small number of message brokers (in comparison to gateways and processors). The structure and communication protocols of the UIMS enable very high message throughput with a minimum broker load. Minimum broker load is ensured because the unified instant message information content is by NOT processed by message brokers. Message brokers controls message flow by inspecting unified instant message meta information instead. Because of the meta information is much more compact as the message itself, a maximum throughput with reduced data transfer can be guaranteed.
- Arbitrary messages can be personalized (a "for your eyes only" or confidential message) with the intended receiver client. That is that only the receiver is able to read the message. Beyond it, the message is forward protected, i.e. the receiver is not allowed to forward the private message to another client. Of cause the message can be copied by cut-and-paste, screen dump or by simply writing it down. But in comparison to a usual messaging system the original message content with the message header (time, date, originator, etc.) can not be forwarded to another client. Message confidentiality and personalization is realized by authentication and optionally encrypting with a receiver key that is valid only for the intended receiver and the given message.
- Instant messages contain a secure read count and a maximum read count. The read count is authenticated together with the message content in such a way that the read count and message content can not be modified by a third party without modification of (at least) one component of the instant message system (instant messaging client, gateway, processor, broker). The maximum read count is intended to be used for copy protection issues and to control the effect of message chain letters (if wanted).
- The originator of an instant message can be hidden. Hiding of the message originator is used for anonymous message creation. The message originator is of cause known and authenticated by the instant messaging system (i.e. by the broker). However the broker may change the originator identification to an anonymously (and unique) alias or cipher identification when a message is submitted to a special interest group. This feature is applied when the message originator require to be anonymous, i.e. in auctions, house sales, anonymous partner search. The anonymous originator of a message can be reached (e.g. to reply his message) only by his (unique) alias provided by the message broker.

## Claims

1. System for transmitting messages over a multimedia network from a sending client to a target client, the messages comprising target client information,
the system comprising:
- a plurality of message gateways (3, 7, 8), each message gateway (3, 7, 8) being configured for the reception and/or transmission over at least one dedicated transfer medium, and
- a message broker (1) connected to the message gateways (3, 7, 8) and being provided with a client database (2), wherein
- a first message gateway is designed, upon reception of a message from a sending client over a first transfer medium, to transmit the message to the message broker (1),
- the message broker (1) is designed to automatically select an appropriate second transfer medium depending on the content of the client database (2) and the target client information,
- a second message gateway comprises means to send the message to the target client over the second transfer medium selected by the message broker (1), and **characterized in that**
- the messages contain a secure read count and maximum read count value limiting the maximum reads of the message.

2. System according to claim 1,
**characterized by**
a common internal message format for the communication respectively between the message broker (1) and the message gateways.

3. System according to anyone of the preceding claims,
**characterized in that** the message gateways are distributed over the network.

4. System according to anyone of the preceding claims,
**characterized in that**
the transfer media comprise analog and digital transfer media.

5. System according to anyone of the preceding claims,
**characterized by**
a message processor (4) provided between the first and the second message gateway for further processing the content of the message to be transmitted.

6. System according to anyone of the preceding claims,
**characterized in that**
the client database (2) comprises addresses of clients, client preferences and/or characteristics of the transfer network to the corresponding target client.

7. System according to anyone to the preceding claims,
**characterized in that**
the message broker (1) is designed to furthermore perform processing control and/or security processing.

8. System according to anyone to the preceding claims,
**characterized in that**
the message broker (1) is designed to furthermore perform accounting and/or billing.

9. System according to anyone of the preceding claims,
**characterized in that**
a plurality of message brokers (1, 1') is provided, at least one message broker (1') being connected with a client database (2') with reduced capacity.

10. Message broker unit for a distributed multimedia system, designed to autonomously select an appropriate transfer medium out of a plurality of transfer media for messages received from a sending client and to be transferred to a target client, wherein the message broker (1) is connected to a client database (2) and the transfer medium selection is performed depending on the target client and the content of the client database (2), **characterized in that**
- the messages contain a secure read count and maximum read count value limiting the maximum reads of the message.

11. Message broker unit according to claim 10,
**characterized in that**
the transfer medium selection is performed depending on the target network, the message type and/or client preferences contained in the client database.

12. Method for sending messages over a multimedia network from a sending client to a target client, the messages comprising target client information,
the method comprising the following steps:
- transmitting the message from the sending client to a message broker (1) over a first transfer medium, and
- transmitting the message from the message broker (1) to the target client over a second transfer medium, wherein the second transfer medium can be identical to the first transfer medium, wherein
- the message broker (1) selects an appropriate second transfer medium out of a plurality of transfer media depending on the content of a client database (2) connected to the message broker (1) and the target client information, and
- the messages contain a secure read count and maximum read count value limiting the maximum reads of the message.

13. Method according to claim 12,
**characterized in that**
the transmission of the message from the sending client to the target client is performed nearly in real-time.

14. Method according to claim 12 or 13,
**characterized in that**
a conversion from the first transfer medium to the second transfer medium is performed depending on the target network, the message type and/or client preferences contained in the client database (2).

15. Method according to anyone of claims 12 to 14,
**characterized in that**
before the transmission to the target client, the content of the message is further processed by digital signing, encryption, watermarking and/or language translation.

16. Method according to anyone of claims 12 to 15,
**characterized in that**
a lifetime is attributed to each message and the message is only transmitted until the expiration of the lifetime.

17. Software program product,
**characterized in that**
when loaded into a computer, it implements a method according to anyone of claims 12 to 16.

## Patentansprüche

1. System zum Übertragen von Nachrichten über ein Multimedianetzwerk von einem sendenden Kunden zu einem Zielkunden, wobei die Nachrichten Zielkundeninformation aufweisen,
wobei das System aufweist:
mehrere Nachrichtenüberleiteinrichtungen (3, 7, 8), wobei jede Nachrichtenüberleiteinrichtung (3, 7, 8) für den Empfang und/oder die Übertragung über zumindest ein dafür bestimmtes Übertragungsmedium konfiguriert ist, und
einen Nachrichtenmakler (1), der mit den Nachrichtenüberleiteinrichtungen (3, 7, 8) verbunden ist und mit einer Kundendatenbank (2) versehen ist, wobei
eine erste Nachrichtenüberleiteinrichtung dazu bestimmt ist, bei Empfang einer Nachricht von einem sendenden Kunden über ein erstes Übertragungsmedium die Nachricht zum Nachrichtenmakler (1) zu übertragen,
der Nachrichtenmakler (1) dazu bestimmt ist, ein geeignetes zweites Übertragungsmedium in Abhängigkeit vom Inhalt der Kundendatenbank (2) und der Zielkundeninformation automatisch auszuwählen,
eine zweite Nachrichtenüberleiteinrichtung eine Einrichtung aufweist, die Nachricht zum Zielkunden über das zweite Übertragungsmedium zu senden, welches durch den Nachrichtenmakler (1) ausgewählt wurde, und
**dadurch gekennzeichnet, dass**
die Nachrichten eine Sicherheitslesezählung und eine maximale Lesezählung enthalten, welche die maximalen Lesevorgänge der Nachricht begrenzen.

2. System nach Anspruch 1,
**gekennzeichnet durch**
ein gemeinsames internes Nachrichtenformat zur Kommunikation zwischen dem Nachrichtenmakler (1) bzw. den Nachrichtenüberleiteinrichtungen.

3. System nach einem der vorhergehenden Ansprüche, **dadurch gekennzeichnet, dass**
die Nachrichtenüberleiteinrichtungen über das Netzwerk verteilt sind.

4. System nach einem der vorhergehenden Ansprüche,
**dadurch gekennzeichnet, dass**
die Übertragungsmedia analoge und digitale Übertragungsmedia aufweisen.

5. System nach einem der vorhergehenden Ansprüche,
**gekennzeichnet durch**
einen Nachrichtenprozessor (4), der zwischen der ersten und der zweiten Nachrichtenüberleiteinrichtung zur weiteren Verarbeitung des Inhalts der zu übertragenden Nachricht vorgesehen ist.

6. System nach einem der vorhergehenden Ansprüche,
**dadurch gekennzeichnet, dass**
die Kundendatenbank (2) Adressen von Kunden, Kundenvorzüge und/oder Kenndaten des Übertragungsnetzwerks zum entsprechenden Zielkunden aufweist.

7. System nach einem der vorhergehenden Ansprüche,
**dadurch gekennzeichnet, dass**
der Nachrichtenmakler (1) dazu bestimmt ist, außerdem Verarbeitungssteuerung und/oder Sicherheitsverarbeitung durchzuführen.

8. System nach einem der vorhergehenden Ansprüche,
**dadurch gekennzeichnet, dass**
der Nachrichtenmakler (1) dazu bestimmt ist, Abrechnung und/oder Gebührenverrechnung durchzuführen.

9. System nach einem der vorhergehenden Ansprüche,
**dadurch gekennzeichnet, dass**
mehrere Nachrichtenmakler (1, 1') vorgesehen sind, wobei zumindest ein Nachrichtenmakler (1') mit einer Kundendatenbank (2') mit reduzierter Kapazität verbunden ist.

10. Nachrichtenmaklereinheit für ein verteiltes Multimediasystem, welches dazu bestimmt ist, ein geeignetes Übertragungsmedium von mehreren Übertragungsmedia für Nachrichten automatisch auszuwählen, die von einem sendenden Kunden empfangen werden und zu einem Zielkunden zu übertragen sind, wobei der Nachrichtenmakler (1) mit einer Kundendatenbank (2) verbunden ist und die Übertragungsmedium-Auswahl in Abhängigkeit vom Zielkunden und dem Inhalt der Kundendatenbank (2) durchgeführt wird,
**dadurch gekennzeichnet, dass**
die Nachrichten eine Sicherheitslesezählung und eine maximalen Lesezählung enthalten, die die maximalen Lesevorgänge der Nachricht begrenzen.

11. Nachrichtenmaklereinheit nach Anspruch 10,
**dadurch gekennzeichnet, dass**
die Übertragungsmedium-Auswahl in Abhängigkeit vom Zielnetzwerk, von der Nachrichtenart und/oder Kundenvorzügen durchgeführt wird, die in der Kundendatenbank enthalten sind.

12. Verfahren zum Senden von Nachrichten über ein Multimedia-Netzwerk von einem sendenden Kunden zu einem Zielkunden, wobei die Nachrichten Zielkundeninformation aufweisen,
wobei das Verfahren die folgenden Schritte aufweist:
Übertragen der Nachricht von einem sendenden Kunden zu einem Nachrichtenmakler (1) über ein erstes Übertragungsmedium, und
Übertragen der Nachricht vom Nachrichtenmakler (1) zum Zielkunden über ein zweites Übertragungsmedium, wobei das zweite Übertragungsmedium identisch mit dem ersten Übertragungsmedium sein kann, wobei
der Nachrichtenmakler (1) ein geeignetes zweites Übertragungsmedium von mehreren Übertragungsmedia in Abhängigkeit vom Inhalt einer Kundendatenbank (2), die mit dem Nachrichtenmakler (1) verbunden ist, und der Zielkundeninformation auswählt, und
die Nachrichten eine Sicherheitslesezählung und eine maximale Lesezählung enthalten, welche die maximalen Lesevorgänge der Nachricht begrenzen.

13. Verfahren nach Anspruch 12,
**dadurch gekennzeichnet, dass**
die Übertragung der Nachricht vom sendenden Kunden zum Zielkunden beinahe in Realzeit durchgeführt wird.

14. Verfahren nach Anspruch 12 oder 13,
**dadurch gekennzeichnet, dass**
eine Umsetzung vom ersten Übertragungsmedium auf das zweite Übertragungsmedium in Abhängigkeit vom Zielnetzwerk, von der Nachrichtenart und/oder Kundenvorzügen, die in der Kundendatenbank (2) enthalten sind, durchgeführt wird.

15. Verfahren nach einem der Ansprüche 12 bis 14,
**dadurch gekennzeichnet, dass**
vor der Übertragung zum Zielkunden der Inhalt der Nachricht weiter durch digitales Unterzeichnen, Verschlüsseln, Wassermarkierung und/oder Sprachübersetzung verarbeitet wird.

16. Verfahren nach einem der Ansprüche 12 bis 15,
**dadurch gekennzeichnet, dass**
jeder Nachricht eine Lebensdauer beigemessen wird und die Nachricht lediglich bis zum Ablauf der Lebensdauer übertragen wird.

17. Software-Programm-Produkt,
**dadurch gekennzeichnet, dass**
wenn in einem Computer geladen, es ein Verfahren gemäß einem der Ansprüche 12 bis 16 ausführt.

## Revendications

1. Système pour transmettre des messages sur un réseau multimédia d'un client émetteur à un client cible, les messages comprenant des informations de client cible, le système comprenant :
- une pluralité de passerelles de messages (3, 7, 8), chaque passerelle de messages (3, 7, 8) étant configurée pour la réception et/ou la transmission sur au moins un support de transfert dédié, et
- un gestionnaire de messages (1) connecté aux passerelles de messages (3, 7, 8) et étant pourvu d'une base de données de clients (2), dans lequel
- une première passerelle de message est conçue, à la réception d'un message provenant d'un client émetteur sur un premier support de transfert, pour transmettre le message au gestionnaire de messages (1),
- le gestionnaire de messages (1) est conçu pour sélectionner automatiquement un deuxième support de transfert approprié en fonction du contenu de la base de données de clients (2) et des informations de client cible,
- une deuxième passerelle de messages comprend des moyens pour envoyer le message à un client cible sur le deuxième support de transfert sélectionné par le gestionnaire de messages (1), et **caractérisé en ce que**
- les messages contiennent une valeur de nombre de lectures de sécurité et de nombre de lectures maximum limitant les lectures maximum du message.

2. Système selon la revendication 1, **caractérisé par** un format de message interne commun pour la communication respectivement entre le gestionnaire de messages (1) et les passerelles de messages.

3. Système selon l'une quelconque des revendications précédentes, **caractérisé en ce que** les passerelles de messages sont distribuées sur le réseau.

4. Système selon l'une quelconque des revendications précédentes, **caractérisé en ce que** les supports de transfert comprennent des supports de transfert analogiques et numériques.

5. Système selon l'une quelconque des revendications précédentes, **caractérisé par** un processeur de messages (4) prévu entre la première et la deuxième passerelle de message pour traiter en outre le contenu du message à transmettre.

6. Système selon l'une quelconque des revendications précédentes, **caractérisé en ce que** la base de données de clients (2) comprend des adresses de clients, des préférences de clients et/ou des caractéristiques du réseau de transfert vers le client cible correspondant.

7. Système selon l'une quelconque des revendications précédentes, **caractérisé en ce que** le gestionnaire de messages (1) est conçu pour effectuer ultérieurement une commande de traitement et/ou un traitement de sécurité.

8. Système selon l'une quelconque des revendications précédentes, **caractérisé en ce que** le gestionnaire de messages (1) est conçu pour effectuer ultérieurement une comptabilité et/ou une facturation.

9. Système selon l'une quelconque des revendications précédentes, **caractérisé en ce qu'**une pluralité de gestionnaires de messages (1, 1') est prévue, au moins un gestionnaire de messages (1') étant connecté avec une base de données de clients (2') de capacité réduite.

10. Unité de gestion de messages pour un système multimédia distribué, conçu pour sélectionner de manière autonome un support de transfert approprié parmi une pluralité de supports de transfert pour des messages reçus à partir d'un client émetteur et à transférer à un client cible, où le gestionnaire de messages (1) est connecté à une base de données de clients (2) et la sélection de support de transfert est effectuée en fonction du client cible et du contenu de la base de données de client (2), **caractérisée en ce que** :
- les messages contiennent une valeur de nombre de lectures de sécurité et de nombre de lectures maximum limitant les lectures maximum du message.

11. Unité de gestion de messages selon la revendication 10, **caractérisée en ce que** la sélection de support de transfert est effectuée en fonction du réseau cible, du type de message et/ou des préférences de client contenues dans la base de données de clients.

12. Procédé pour envoyer des messages sur un réseau multimédia d'un client émetteur à un client cible, les messages comprenant des informations de client cible, le procédé comprenant les étapes suivantes :
- transmettre le message provenant du client émetteur à un gestionnaire de messages (1) sur un premier support de transfert, et
- transmettre le message du gestionnaire de messages (1) au client cible sur un deuxième support de transfert, où le deuxième support de transfert peut être identique au premier support de transfert, où
- le gestionnaire de messages (1) sélectionne un deuxième support de transfert approprié parmi une pluralité de supports de transfert en fonction du contenu d'une base de données de clients (2) connectée au gestionnaire de messages (1) et des informations de client cible, et
- les messages contiennent une valeur de nombre de lectures de sécurité et de nombre de lectures maximum limitant les lectures maximum du message.

13. Procédé selon la revendication 12, **caractérisé en ce que** la transmission du message du client émetteur au client cible est effectuée presque en temps réel.

14. Procédé selon la revendication 12 ou 13, **caractérisé en ce qu'**une conversion du premier support de transfert au deuxième support de transfert est effectuée en fonction du réseau cible, du type de message et/ou des préférences de client contenues dans la base de données de clients (2).

15. Procédé selon l'une quelconque des revendication 12 à 14, **caractérisé en ce que**, avant la transmission au client cible, le contenu du message est traité en outre par signature numérique, cryptage, filigranage et/ou traduction de langage.

16. Procédé selon l'une quelconque des revendication 12 à 15, **caractérisé en ce qu'**une durée de vie est attribuée à chaque message et le message est transmis seulement jusqu'à l'expiration de la durée de vie.

17. Produit de logiciel, **caractérisé en ce que**, quand il est chargé dans un ordinateur, il met en oeuvre un procédé selon l'une quelconque des revendications 12 à 16.
